# EUROPEAN PATENT APPLICATION

(11) **EP 3 764 180 A1**
(43) Date of publication of application: **13.01.2021**
(21) Application number: 19185070.0
(22) Date of filing: 08.07.2019
(51) Int. Cl.: G05B 23/02

(54) **DEVICE NETWORK HAVING A MODULAR ARCHITECTURE FOR PREDICTIVE MAINTENANCE ON INDUSTRIAL MACHINES AND EQUIPMENTS, AND RELATED METHOD OF USE**

(71) Applicant: Proteo Engineering Srl, 41057 Spilamberto, Modena (IT)
(72) Inventor: Guidarini, Stefano, Guiglia (IT)
(74) Representative: De Tullio, Michele Elio

(57) **Abstract**

The present invention refers to a network of devices for predictive maintenance on at least one machine of an industrial plant.

The network comprises:
- a plurality of devices, each of which is positioned on its corresponding machine or industrial plant to be submitted to said predictive maintenance and is provided with a) means suitable for collecting data relevant to the machine or industrial plant on which it is positioned and b) a microprocessor, connected to said means suitable for collecting data, and suitable for processing said data, and
- a central unit suitable for receiving the data processed by every microprocessor present in each of said plurality of devices.

In this way, a network of devices featuring a modular architecture is implemented, wherein every device comprises one microprocessor and one specific sensor connected to the microprocessor itself.

It is thus possible to get a permanent and homogeneous view of the machines of a plant.

## Description

### Field of the invention

The present invention relates to systems and devices for predictive maintenance in industrial plants and machinery. In particular, the present invention relates to a network of modular architecture devices for predictive maintenance on machines and other similar industrial equipment and to their method of use, said devices being modular.

### Present status of the art

Maintenance operations on industrial plants and on their respective machinery aim at guaranteeing their correct operation, as well as at reaching optimization levels for the production complex and for the whole value system in order to provide an additional competitive advantage.

By virtue of this, there are an ever-growing interest and need for implementing an efficient data collection and monitoring process in conditions of use and, also, for having appropriate algorithms at his/her disposal as necessary to process and transform said data into information usable for understanding the operating status of an industrial plant and its respective machinery, and consequently taking specific actions aiming at preserving a correct operating status.

Substantially, maintenance has its own standards and its goal is referred to as "prescriptive maintenance", i.e. that type of maintenance whereby machines know their own statuses so as to request an assistance from humans, even non-skilled ones, and to instruct them what they should do in order to solve the problem. A prescriptive maintenance system predicts abnormalities and allows to apply the best solutions in order to prevent them or at least limit the damages caused by them.

The predictive component is essential for implementing a prescriptive system. It is not sufficient to predict that an abnormality will occur. It is necessary to locate and identify the causes thereof.

Predictive maintenance is a true revolution in the maintenance activities related to an industrial plant in that it is destined to play an increasingly important role in the next future, not only in the manufacturing industry, but also in the everyday life of those who use machines and plants.

Whereas the prior art practice, which is referred to as "preventive maintenance", is based on a statistical approach related to the operating times of the critical component parts, predictive maintenance, on the contrary, aims at preventing malfunctions through a monitoring of specific functional parameters. The data obtained from such monitoring, submitted to a study by way of appropriate statistical models, makes it possible to state whether a fault is impendent.

A necessary precondition to implement a predictive maintenance paradigm is that of being capable of acquiring and storing data coming from the field via appropriate sensor devices. Data collection is usually based on using advanced technologies for obtaining diagnostic information from plants. The opportunity of profitably applying predictive analysis techniques entails the possibility of:
- identifying abnormalities in machinery at the right time and consequently preventing consequences of economic and environmental natures and in the interests of safety;
- allowing to control and reduce costs, the quality provided being equal;
- providing the possibility of extending and maximizing the lifetimes of goods and plants;
- allowing to measure the performances of plants and allowing to perform maintenance activities only when it is actually requested.

A predictive maintenance system allows not only to predict the occurrence of a fault in advance, but also to effectively address resources, while eliminating those maintenance activities which are unnecessary, thus improving the overall production efficiency.

The analysis tools on which known predictive maintenance processes and system are based include, amongst others:
- sensors for acquiring appropriate control parameters, which shall be properly determined;
- algorithms and methods for determining the "normal operation" values and for monitoring deterioration and estimate of the operating time before a next abnormality arises;
- an interface for managing and transferring information to the appointed personnel.

The predictive maintenance practices and processes are implemented through a periodical use of said analysis tools, which are either integrated in the plant or not integrated in the plant, and are applied at scheduled time intervals by the operators, who either directly belong to the involved company or are provided by supplier companies.

The most common analysis mode consists of making periodical assessments by using especially designed portable instruments.

This mode is useful; however it does not allow a precise acquisition of a set of data that can be used to calculate trends and feed intelligent predictive systems.

Also, hardly can data acquired in this way be related to the remaining data available in order to create complete representations.

A number of problems also arise relevant to the use of personnel and predictive maintenance instruments as follows:
- most maintenance operations just repair a damage without storing the experience and information acquired in order to trigger subsequent corrective actions and optimize the maintenance process, whereby a potential valuable knowledge would go lost;
- many of the actually spent resources might be saved.

In order to obviate said drawbacks, there is a trend towards installing specific sensors in a plant in order to get a control level that could not be achievable otherwise.

Among all types of sensors, those which usually are actually suitable for being integrated in a pant include, for example:
- vibration sensing devices;
- local temperature, humidity, and pressure sensors;
- power consumption detectors.

The predictive analysis mode that is currently the most popular is based on a periodical intervention by operators, equipped with portable assessment instruments, who periodically reach the plants at a frequency that depends on the criticality level of the plants themselves. Often is this frequency a three-monthly or six-monthly one.

This mode is undoubtedly useful for improving plant reliability; however, it features a number of drawbacks:
- the machine data that is assessed is often not available or not easily accessible or not integratable;
- often are the sensors present in the machines not suitable for supplying an appropriate system learning process;
- the obsolescence cycle of an industrial machine is definitely longer than the obsolescence cycle of the analysis systems and of the productive application types;
- many machines or automations present in a plant, even if necessary for production, do not provide any data and, simultaneously, they are located in positions that are complex and difficult to reach even for periodical analyses.

This patent applicant felt the need for implementing a network of devices that is efficient for predictive maintenance and solves the above drawbacks.

### Summary of the invention

In a first aspect, the present invention relates to a network of devices for predictive maintenance on machines and other similar industrial equipment like that set forth in claim 1.

As a matter of fact, this patent applicant surprisingly found that the above-mentioned technical problem can be solved in an effective and reliable manner by way of a network of devices for predictive maintenance installed in at least one machine of an industrial plant, characterized in that said network comprises:
- a plurality of devices, each of which is positioned on its corresponding machine or industrial plant to be submitted to said predictive maintenance and is provided with a) means suitable for collecting data relevant to the machine or industrial plant where it is positioned, and b) a microprocessor, connected to said means suitable for collecting data, and suitable for processing said data, and
- a central unit capable of receiving the data processed by every microprocessor present in each of said plurality of devices.

In this way, a network of devices is realized featuring a modular architecture, wherein every device comprises one microprocessor and one specific sensor connected to the microprocessor itself.

This arrangement makes it possible to get a permanent and homogeneous view of the machines in a plant.

It is also possible to rapidly and simply install, or remove, any of said devices in any contexts wherever such measure has an effective utility. As a matter of fact, this arrangement allows to update, replace, or integrate the network of devices, hence the means used to collect the data contained in the devices themselves, even several times during the life cycle of a machine, for instance in order to correctly meet changed production requirements. Everything is connected and automated; data is immediately available and information management is fully automatic.

Further advantages provided by the present invention include a continuous monitoring of the status of a plant, the latter being defined as set of machines and mechanical members, or one single machine. Consequently, this allows to use data in a very effective and efficient manner and to calculate the trends of increments, with very short time intervals, up to near real time in those cases when this is necessary.

According to a preferred embodiment, said network comprises a variable number of devices depending on the type of machine or industrial equipment to be monitored, and on the basis of the type of data to be collected and processed.

According to a preferred embodiment, said means suitable for collecting data include sensors or devices for assessing physical quantities, such as, for example, vibrations, sounds, and/or temperatures.

This approach allows to solve the problem of performing a monitoring of machines directly via the activity of human operators who physically reach the field, being equipped with portable instruments that allow to perform punctual assessment operations on a typically three-monthly or six-monthly base.

According to a preferred embodiment, said data collection means comprise a sensor for assessing accelerations, a sensor for assessing temperatures, such as for instance an infrared sensor or a thermal camera, and/or a microphone sensor for assessing higher frequencies.

According to a preferred embodiment, in each of said plurality of devices said means suitable for collecting data is operationally connected to said corresponding microprocessor suitable for processing said data by way of connection means with respect to a telecommunications network and/or a TCP/IP network on an MQTT high level protocol.

According to a preferred embodiment, in each of said plurality of devices every microprocessor is suitable for performing pre-analysis operations on the data received from said corresponding data collection means. Said pre-analysis operations are performed by a microprocessor on the basis of artificial intelligence algorithms.

According to a preferred embodiment, said central unit is a remote server.

According to a preferred embodiment, each of said plurality of devices is capable of transmitting said pre-analyzed data to said remote server wirelessly.

In this way, extremely reliable data transmission networks are realized spanning distances longer than 10 km. The present invention thus allows to implement a non-bulky and wireless network of modular architecture devices.

According to a preferred embodiment, said remote server is capable of submitting the already pre-analyzed data to further processings and to store said data.

According to a preferred embodiment, said remote server is capable of generating one or more notification or alarm messages on the status of said at least one machine or industrial plant.

According to a preferred embodiment, said remote server is capable of using all data relevant to each individual machine or industrial plant analysis stored therein for further data processings, if any.

In this way, thanks to the big amount of data available and to its accuracy it is possible to produce extremely accurate predictions.

According to a preferred embodiment, each of said plurality of devices is provided with a base, suitable for being secured to the machine or industrial plant with respect to which data is collected, and a case, removably secured to said base, suitable for containing internally thereto said means suitable for collecting data for said machine or industrial plant which said base and said microprocessor are secured to.

In this way, the data collection means and their corresponding microprocessor, placed inside the case, are small-size devices and such that each of them can be installed in specific positions of the machine to be monitored.

According to a preferred embodiment, said case is suitable for being filled with epoxy resin or another bi-component resin.

In this way, the data collection means, for instance a sensor, is made solid and integral with the case to prevent the solder joints of the electronic components present thereon from getting loose or oxidizing because of vibrations, humidity or other reasons. It follows that sensor is not further modifiable and, once packaged, its nature and that of the whole device which it is part of is not modified any longer.

In a second aspect, the present invention relates to a method for predictive maintenance on machines and other similar industrial equipment as that set forth in claim 9.

As a matter of fact, the present patent applicant surprisingly found that the technical problem described above can be effectively and reliably solved by way of a predictive maintenance method applied to at least one machine and/or industrial plant, which comprises the following steps:
a) setting up a network which comprises a plurality of devices, each of which is positioned on said machine or industrial plant and is provided with means suitable for collecting data relevant to that machine or industrial plant on which it is positioned, and a microprocessor suitable for receiving and processing said data;
b) performing pre-analysis operations on said assessed data by way of said microprocessor;
c) sending said pre-analyzed data to a remote server;
d) enabling said remote server to submit the already pre-analyzed data to a further processing, to store said data, and to generate one or several notice or alarm messages on the status of said at least one machine or industrial plant.

According to a preferred embodiment, said method also comprises a further step e) wherein said remote server is capable of using all data stored in said remote server for each individual machine and/or industrial plant analysis for further data processings, if any. The method of using the network of modular architecture devices according to the present invention makes it possible a high standardization, an implementation of a network of devices that is customizable as a function of machine or industrial equipment, in a fast, sustainable, and reliable manner.

In addition, the machinery being continuously monitored through an analysis of vibrations and of the remaining parameters, by using devices according to the present invention, makes it possible to determine a "continued worsening" trend. Whenever the worsening rates of the indicators exceed an alert level, the system reports the problems found. The locations of the possible problems are set upon designing the plant.

The system and the devices according to the present invention make it possible to process data in such a way as to make it available for the classification algorithms with the purpose of assessing a specific abnormality, recognizing its causes, and identifying its solutions.

### Brief description of the drawings

Other advantages and characteristics of the network of devices for predictive maintenance according to the present invention will be apparent from the following detailed description of some embodiments, which are presented for exemplary, non-limitative purposes, and with a special reference to the attached drawings and their respective references in the legend, wherein:
- figure 1 illustrates a diagram of the network of devices comprising n modular devices,

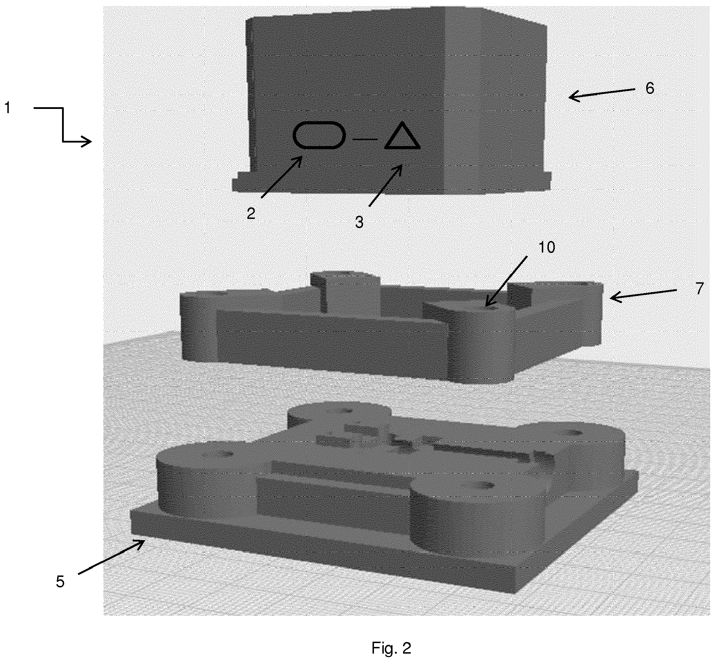

- figure 2 illustrates an exploded axonometric view of a device of the network of devices according to figure 1,

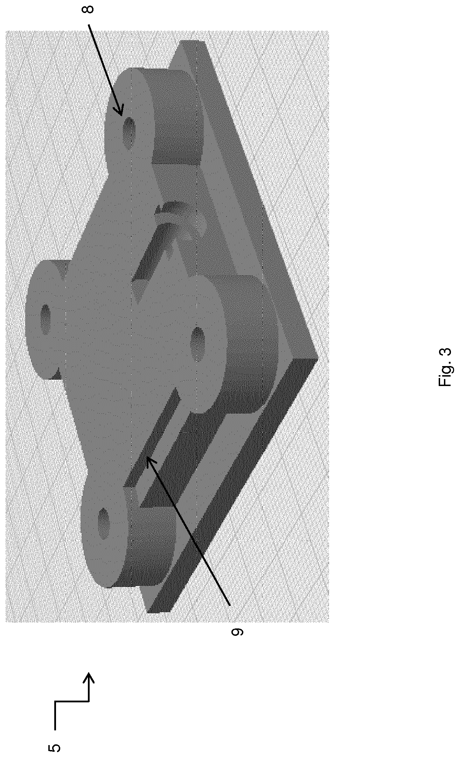

- figure 3 illustrates a detail of the base of the device shown in figure 2.

### Detailed description of the invention

The following detailed description relates to a specific embodiment of the network of devices 1 for predictive maintenance according to the present invention, without limiting its contents.

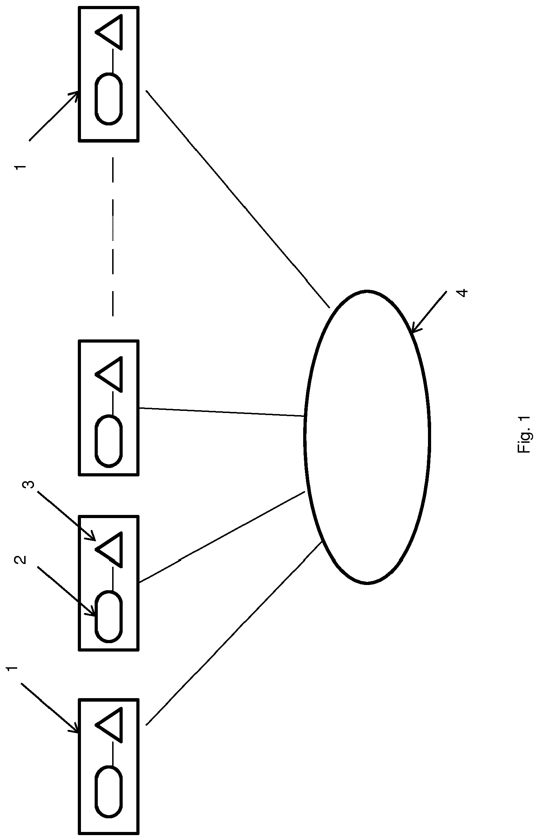

Figure 1 shows a network of devices 1 featuring a modular architecture which, in this specific case, comprises four devices 1 (but the number of devices 1 might be greater or smaller), each of which being operationally connected to a remote server 4.

Every device 1 comprises internally thereto data collection means 2 and a microprocessor 3, connected to the data collection means 2, suitable for processing this data and pre-analyzing it.

Every device 1 is formed of a base fastening element 5, a cover element 7 (suitable for being secured to the base element 5), and a case 6 suitable for being secured inside the cover element 7.

The base element 5 is secured to the machine to be monitored by using appropriate gluing means. The base element 5 is provided with four holes 8 placed at the four corners, provided with an equal number of self-locking bolts suitable for screwing tightening screws therein.

The base element 5 is also provided with a groove 9 on its upper section for inserting a rubber cable entry therein, and a two-pole power terminal is present in the lower side (not shown in the figures).

The cover element 7 is provided with four holes 10 placed at the four corners, in correspondence with the four holes 8 of the base element 5 respectively, for screwing tightening screws therein. Also, an insert made from a conductor material is properly inserted at the base of the cover element 7. After screwing the cover element 7 in the base element 5, the insert made from a conductor material is operationally connected to the two-pole power terminal.

The shape of the case 6 is such as to allow its insertion into the cover element 7, so as to be firmly and removably secured thereto and consequently to the base element 5 secured to the machine to be monitored.

The case 6 is provided with data collection means 2 operationally connected to data processing means 3, data filing means present in or connected to the remote server 4, and connection means with respect to a telecommunications network and/or a TCP/IP network. The data collection means 2 comprise sensors for assessing physical quantities, in particular vibrations, sounds, and temperatures. Such data processing means 3 comprise processors or microcontrollers suitable for processing data based on artificial intelligence algorithms directly mounted on board of the machine and in the field. The connection means with respect to a telecommunications network and/or a TCP/IP network are provided with wireless data transmission means suitable for establishing extremely reliable data transmission networks spanning distances of more than 10 km.

Every device 1 is suitable for being secured to a machine to be monitored, in contact therewith, perfectly integrally with a target wall of said machine, but without modifying nor drilling the walls themselves.

Advantageously, in the case of a fault or a need for a revision or update, it is possible to remove the cover element 7 from its seat and, if necessary, to unscrew the tightening screws to replace it, without being obliged to unglue or re-glue the base fastening element 5 and retaining the same exact position the device 1 had in order to provide for an appropriate consistency of data.

It is thus apparent that the device 1 features easy assembling, disassembling, replacing, and updating, thus determining the modularity feature of the network of devices 1.

The case 6 of the device 1 can be conveniently manufactured by way of 3D molding, depending on the requirements, or by way of die-casting or other suitable manufacturing systems. The case 6 can be made from different materials depending on the conditions of use.

Every device 1 is suitable for integrating any type of physical property data collection means 2 and subsequently transferring data on specific protocols (for example, 12C or SPI) by way of appropriate data transmission means operationally connected to data processing means 3 such as, for instance, a controller component. In a preferred embodiment, the controller component is provided with a firmware developed in C language such as, for instance, the component ESP8266, having a firmware developed in C language.

Some of the sensors 3 comprised in the devices 1 according to the invention are illustrated below.

A sensor for assessing accelerations: this component is connected via SPI and results in a sample frequency of 3200 Hz on 3 axes; data coming from the sensor is wirelessly sent to the server, which calculates its spectrum via Fast Fourier Transfer (FFT). The spectrum obtained is historicized with a frequency resolution of 10 Hz over 1600, (i.e. at a Nyquist frequency of 3200).

Resolution can be varied as necessary, whereas the original data of the waveform is not saved because it would occupy space unnecessarily. A trend is calculated on each of the points thus obtained for alarm generation.

A sensor for assessing temperatures: for example, an infrared sensor, a thermal camera, with a resolution of 8x8. I2C-connected, it sends data to the remote server 4 in the MQTT mode. Data is used for calculating trends and thresholds, and for monitoring purposes.

A microphone sensor: is used for assessing higher frequencies; it is an analog one and is connected to the analog input of the controller which performs a sampling as with the sensor used for assessing accelerations.

The devices 1 of the network of devices according to the present invention are small-size devices, and each of them can be placed in specific positions in the machine to be monitored.

The device 1 shall be installed on the machine in such a way that, after inserting the circuitry, the case 6 is filled with epoxy resin or another bi-component resin to make the sensor solid and integral and in order to prevent the solder joints of the electronic components from getting loose or oxidizing because of vibrations, humidity or other reasons. It follows that the sensor is not further modifiable.

The devices 1 receive power from an external, 3.3V to 5V low-voltage electric power supply, which comes from a source whatsoever and makes them safe, i.e. they do not damage persons nor things.

The device 1 might also be battery-powered according to, for instance, a "Deep Sleep" type technology.

The standard power consumption of every device 1 is approximately 100 mAh, during the assessment and transmission steps, but it is possible to switch all functionalities of the controller off and enter a "deep sleep" status, by suspending all controller systems, but the Real Time Clock (RTC), for a maximum period of approximately 71 minutes.

The device 1 can be calibrated to perform, for instance, one set of measurements every hour, and is capable of operating for at least two years, being powered from a common 3.6V, 15,000 mAh battery by completely simply deferring access for approximately 12 seconds every hour. This makes the adoption of more complex self-powering technologies substantially unnecessary.

The network of devices 1 according to the present invention makes it possible a continuous monitoring of a machine and to use data in a much more effective and efficient manner and to calculate trends of increments, at very high frequencies, up to near real time in those cases wherein this is necessary.

The network of devices 1 also allows to automate generation of alerts via the use of statistic algorithms and allows to implement and use a "machine learning" system, thus producing extremely accurate predictions thanks to the big amount of data available and its accuracy.

Also, the network of devices 1 features automated connections which allow to make data immediately available and information management fully automated.

The problem solved by the network of devices 1 is that of receiving one or several messages indicating a possible malfunction of one or several machines before a fault occurs, in order to prevent any damages to machines, reduce downtimes, contain maintenance costs, and improve efficiency.

According to the method of using said network of devices 1, data is acquired from several sensors simultaneously and synchronously so as to make it possible to represent and study complex frameworks.

Every device 1 of the network of the devices acquires data from the machine wherein it is installed and sends it, via data transmission means, to external processing and filing means, for example a remote server, wherein data transmission is characterized in that it uses the MQTT protocol, or other protocols for a particularly "dense" or "fast" data transmission.

Data processing also outputs signaling of abnormalities that are apparently related to occurrence of breakage or stop events.

Naturally, many modifications and variants, without departing from the scope of protection of the invention, of the preferred embodiments described above will be apparent to those skilled in the art.

Therefore, the present invention is not limited to the preferred embodiments described above, which are illustrated for exemplary, non-limitative purposes only, but it is defined by the following claims.

## Claims

1. A network of devices (1) for predictive maintenance on at least one machine or one industrial plant, **characterized in that** said network comprises:
- a plurality of devices (1), each of which is positioned on its corresponding machine or industrial plant to be submitted to said predictive maintenance and is provided with a) means suitable for collecting data (2) relevant to the machine or to the industrial plant wherein it is positioned, and b) a microprocessor (3), connected to said means suitable for collecting data (2), suitable for processing said data, and
- a central unit (4) suitable for receiving the data processed by every microprocessor (3) present in each of said plurality of devices (1).

2. The network of devices (1) according to claim 1 wherein said means suitable for collecting data (2) are sensors or devices capable of assessing vibrations, sounds and/or temperatures.

3. The network of devices (1) according to any of the previous claims 1 or 2 wherein every microprocessor (3) in each of said plurality of devices (1) is capable of performing pre-analysis operations on the data received from said corresponding data collection means (2).

4. The network of devices (1) according to claim 3, wherein said central unit (4) is a remote server (4) wherein each of said plurality of devices (1) is capable of sending said pre-analyzed data wirelessly.

5. The network of devices (1) according to claim 4, wherein said remote server (4) is capable of submitting the already pre-analyzed data to a further processing and of storing said data.

6. The network of devices (1) according to claim 5, wherein said remote server (4) is capable of generating one or several notice or alarm messages on the status of said at least one machine or industrial plant.

7. The network of devices (1) according to any of the previous claims 4 thru 6, wherein said remote server (4) is capable of using the data relevant to each individual machine or industrial plant analysis stored therein for further data processings, if any.

8. The network of devices (1) according to any of the previous claims, wherein each of said plurality of devices (1) is provided with a base (5) suitable for being secured to the machine or industrial plant with respect to which data is collected, and a case (6), removably secured to said base (5), suitable for containing internally thereto said means suitable for collecting data (2) for said machine or industrial plant which said base (5) and said microprocessor (3) are secured to.

9. A method for predictive maintenance on at least one machine or industrial plant comprising the following steps:
a) setting-up a network that comprises a plurality of devices (1), each of which is positioned on said machine or industrial plant and is provided with means suitable for collecting data (2) relevant to the machine or industrial plant on which it is positioned, and a microprocessor (3) suitable for receiving and processing said data;
b) performing pre-analysis operations on said assessed data via said microprocessor (3);
c) sending said pre-analyzed data to a remote server (4);
d) enabling said remote server to submit the already pre-analyzed data to a further process, to store said data, and to generate one or several notice or alarm messages on the status of said at least one machine or industrial plant.

10. The method according to claim 9, also comprising a step e) of using all data relevant to each individual analyzed machine or industrial plant stored in is said remote server (4) for further processings, if any.
